# EUROPÄISCHE PATENTSCHRIFT

(11) **EP 3 405 697 B1**
(45) Veröffentlichungstag und Bekanntmachung des Hinweises auf die Patenterteilung: **27.10.2021**
(21) Anmeldenummer: 16813073.0
(22) Anmeldetag: 19.12.2016
(51) Int. Cl.: F16F 15/16, F16F 15/167

(54) **DREHSCHWINGUNGSDÄMPFUNGSANORDNUNG FÜR EINEN ANTRIEBSSTRANG EINES FAHRZEUGS**
TORSIONAL VIBRATION DAMPING ASSEMBLY FOR A DRIVE TRAIN OF A VEHICLE
ENSEMBLE D'AMORTISSEMENT DE VIBRATIONS DE TORSION POUR TRANSMISSION DE VÉHICULE

(30) Priorität: 22.01.2016 DE 102016200906
(43) Veröffentlichungstag der Anmeldung: 28.11.2018
(73) Patentinhaber: ZF Friedrichshafen AG, 88046 Friedrichshafen (DE)
(72) Erfinder: ORLAMÜNDER, Andreas, 97453 Schonungen (DE); LORENZ, Daniel, 97688 Bad Kissingen (DE); DÖGEL, Thomas, 97720 Nüdlingen (DE); SIEMENS, Kyrill, 97084 Würzburg (DE); WACK, Erwin, 97464 Niederwerrn (DE); DIECKHOFF, Tobias, 97078 Würzburg (DE); TERWART, Markus, 97711 Thundorf (DE); REISCH, Matthias, 88214 Ravensburg (DE); ARZNER, Matthias, 88048 Friedrichshafen (DE)
(74) Vertreter: ZF Friedrichshafen AG
(86) Internationale Anmeldenummer: PCT/EP2016/081659
(87) Internationale Veröffentlichungsnummer: WO 2017/125222

(56) Entgegenhaltungen:
- EP-A2- 0 400 508
- DE-A1-102006 061 342
- DE-A1-102009 024 564

## Beschreibung

Die vorliegende Erfindung betrifft eine Drehschwingungsdämpfungsanordnung für einen Antriebsstrang eines Fahrzeugs, umfassend eine zur Drehung um eine Drehachse anzutreibenden Primärseite und eine über ein Wirkmedium mit der Primärseite zur Drehung um die Drehachse und zur Relativdrehung bezüglich einander gkoppelte Sekundärseite.

Aus der DE 10 2006 061 342 A1 ist eine derartige Drehschwingungsdämpfungsanordnung bekannt, bei der eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung eine Mehrzahl vorzugsweise im Wesentlichen zylindrischer Kammereinheiten umfasst, die bezüglich der ersten Dämpferfluidkammeranordnung radial außen oder/und radial innen und in Umfangsrichtung aufeinander folgend angeordnet sind, wobei in Zuordnung zu jeder Kammereinheit ein das erste Dämpferfluid von dem zweiten Dämpferfluid trennendes und bei Druckveränderung in der Kammereinheit im Wesentlichen radial verlagerbares Trennelement vorgesehen ist. Der Vorteil dieses Schwingungsreduzierungssystems ist die weitgehend beliebig niedrig einstellbare Steifigkeit, die eine sehr gute Entkopplung der Drehschwingungen des Verbrennungsmotors ermöglicht. Jedoch ergibt sich der Nachteil, dass in einem unverzweigten Kettenschwinger trotz niedrigster Steifigkeit die Drehschwingungen nicht hinreichend reduziert werden können, da selbst bei einem Absenken nahe 0 eine Seitenwellensteifigkeit des Fahrzeuges, die zum Restantriebsstrang gehört, das Schwingungsverhalten des gesamten Antriebsstrangs definiert.

Eine weitere Drehschwingungsdämpfungsanordnung mit mitdrehenden Druckspeichern ist aus der EP0400508 bekannt.

Es ist die Aufgabe der vorliegenden Erfindung, eine Drehschwingungsdämpfungsanordnung für einen Antriebsstrang eines Fahrzeugs vorzusehen, mit welcher bei kompakter Bauart und geringem Masseträgheitsmoment eine effiziente Minderung von Drehschwingungen in dem in einem Antriebsstrang übertragenen Drehmoment erreicht werden kann.

Erfindungsgemäß wird diese Aufgabe gelöst durch eine Drehschwingungsdämpfungsanordnung für einen Antriebsstrang eines Fahrzeugs, umfassend eine um eine Drehachse A drehbare Verdrehmassenanordnung, wobei die Verdrehmassenanordnung ein um die Drehachse A drehbares Primärträgheitselement und ein zu dem Primärträgheitselement entgegen der Wirkung einer Steifigkeit relativ verdrehbares Sekundärträgheitselement und eine Verdrängereinheit mit einem Arbeitsraum umfasst, wobei die Verdrängereinheit einerseits mit dem Primärträgheitselement oder mit dem Sekundärträgheitselement und andererseits mit einer Tilgermasse wirkverbunden ist. Dabei sind das Primärträgheitselement und das gegen die Steifigkeit verdrehbare Sekundärträgheitselement einem Zweimassenschwungrad vergleichbar aufgebaut. Die Steifigkeit kann hier in Form eines Energiespeichers, vornehmlich eine Gasfeder oder ein elastisch verformbares Element, wie eine Stahlfeder ausgeführt sein. Der Nehmerzylinder, der vorteilhaft aus einem Gehäuseelement, einem Verdrängerkolben und einem Arbeitsraum besteht, ist dabei einerseits beispielsweise mit dem Gehäuseelement mit dem Primärträgheitselement oder dem Sekundärträgheitselement verbunden. Weiter ist der Verdrängerkolben der Verdrängereinheit mit einer Tilgermasse verbunden. Dabei ist der Arbeitsraum der Verdrängereinheit mittels einer Verbindungsleitung und über eine Drehdurchführung mit einem Arbeitsraum eines Druckspeichers, der nicht um die Drehachse A drehbar ist, durch ein Wirkmedium, hier vorteilhaft eine Hydraulikflüssigkeit wirkverbunden. Ein Energiespeicher des Druckspeichers kann in Form einer Gasfeder oder in Form eines elastisch verformbaren Elements ausgeführt sein. Die Funktionsweise für den Fall, dass die Verdrängereinheit an dem Sekundärträgheitselement befestigt ist, ist damit wie folgt. Von einem Antriebsaggregat, beispielsweise ein Verbrennungsmotor wird ein Drehmoment mit den darin enthaltenen Drehschwingungen zu dem Primärmassenträgheitselement geleitet. Über den Energiespeicher gelangt das Drehmoment mit den Drehschwigungen an das Sekundärträgheitselement. Die Drehschwingungen erzeugen in dem Arbeitsraum der Verdrängereinheit einen Fluiddruck in dem Wirkmedium, da sich der Verdrängerkolben wiederum gegen die Tilgermasse abstützt. Dabei leitet das Wirkmedium, beispielsweise die Hydraulikflüssigkeit den Fluiddruck über die Verbindungsleitung an den Arbeitsraum des Druckspeichers weiter, der sich mittels eines Verdrängerkolbens gegen die Gasfeder oder auch gegen beispielsweise eine Stahlfeder abstützt. Hierdurch erfolgt eine Schwingungsreduzierung, wobei der Druckspeicher nicht um die Drehachse A mitrotiert und somit nicht in das Massenträgheitselement der Verdrehmassenanordnung eingeht, was vorteilhaft für ein Ansprechverhalten des Verbrennungsmotors ist. Auch kann hierdurch vorteilhaft von außen, also nicht an den rotierenden Teilen der Drehschwingungsdämpfungsanordnung eine Änderung des Druckspeichers vorgenommen werden um variabel auf vorhandene Drehschwingungen und damit auf deren Reduzierung Einfluss nehmen zu können. Eine Versorgungspumpe kann vorteilhaft mit dem Wirkmedium verbunden werden um einen Leckageausgleich vorzunehmen und / oder um Einfluss auf das Druckniveau im Wirkmedium und damit auf das Schwingungsdämpfungsverhalten nehmen zu können.

Eine weitere Ausgestaltung sieht vor, dass eine Steifigkeitsanordnung parallel oder seriell zu der Wirkrichtung der Verdrängereinheit zwischen der Tilgermasse und dem Primärträgheitselement oder zwischen der Tilgermasse und dem Sekundärträgheitselement wirksam ist. Dabei ist die Steifigkeitsanordnung vorteilhaft aus einer Gasfeder oder aus einem elastisch verformbaren Element, wie beispielsweise eine Stahlfeder ausgeführt.

Die Erfindung sieht vor, dass der Arbeitsraum der Verdrängereinheit mittels einer Verbindungsleitung mit einem externen und zur Drehachse A drehfesten Arbeitsraum eines Druckspeichers wirkverbunden ist. Wie bereits voranstehend beschrieben, wird über die Verbindungsleitung das Wirkmedium, beispielsweise die Hydraulikflüssigkeit, von dem Arbeitsraum der Verdrängereinheit zu dem Arbeitsraum des Druckspeichers geleitet. Der Druckspeicher umfasst dabei vornehmlich den Arbeitsraum und ein Gehäuseelement und einen Verdrängerkolben.

Weiter kann der Druckspeicher einen Energiespeicher umfasst, wobei der Energiespeicher ein elastisch verformbares Element oder ein gaskompressibles Element ist.

Dabei wirkt der Energiespeicher entgegen der Wirkrichtung des Fluiddrucks der Hydraulikflüssigkeit.

Wie bereits vorangehend erwähnt kann das das Wirkmedium zwischen der Verdrängereinheit und dem Druckspeicher ein viskoses Medium, ein Gas oder eine Kombination aus einem viskosem Medium und einem Gas sein.

Eine weitere vorteilhafte Ausführungsform sieht vor, dass die Verbindungsleitung eine Drehdurchführung umfasst, wobei die Drehdurchführung die um die Drehachse A drehbare Verdrängereinheit und den zur Drehachse A drehfesten Druckspeicher flüssigkeitsdicht und oder gasdicht und zueinander verdrehbar verbindet.

In einer weiteren Ausgestaltung umfasst die Verdrängereinheit ein Lastfederelement, wobei das Lastefederelement entgegen einer Wirkrichtung einer Volumenänderung V1 des Arbeitsraumes der Verdrängereinheit wirkt. Hierdurch kann eine zusätzlich Betriebspunktverschiebung der wirksamen Tilgersteifigkeit ermöglicht werden, indem der Fluiddruck des Wirkmediums in der Verdrängereinheit und im Druckspeicher entgegen der Lastfeder erhöht wird. Diese Lastfeder kann als eine Stahlfeder oder auch als eine Gasfeder ausgeführt sein. Durch das Wechselmoment an dem Verdränger wird über den Wechseldruck auf die Tilgermassenanordnung bestehend aus der Tilgermasse und der Tilgersteifigkeitsanordnung angeregt. Bei geeigneter Abstimmung wirkt die Tilgermassenanordnung gegenphasig und löscht so die Schwingungen zumindest teilweise aus. Beispielsweise kann so das System drehzahladaptiv oder ordnungsadaptiv oder beides, beispielsweise bei Zylinderabschaltung von 2. Ordnung im Vierzylinderbetrieb auf 1. Ordnung im Zweizylinderbetrieb abgestimmt werden.

Eine weitere Ausführungsform sieht vor, dass der Druckspeicher eine Versorgungspumpe und oder eine Steuerregelungseinheit umfasst, wobei die Versorgungspumpe und oder die Steuerregelungseinheit mit dem Wirkmedium des Arbeitsraumes des Druckspeichers wirkverbunden ist.

Dies kann zum einen vorteilhaft sein um eine Leckage auszugleichen und oder um eine Lastpunktverschiebung der Tilgermassenanordnung zu erreichen. Hierzu kann der Druck des Wirkmediums durch die Versorgungspumpe und den Druckspeicher verändert werden. Hierzu ist auch die Steuerregelungseinheit vorteilhaft, die den notwendigen Druck des Wirkmediums regeln kann. Dabei kann die Versorgungspumpe vorteilhaft eine Öldruckpumpe oder ein Kompressor sein. Die Steuerregelungseinheit umfasst vorteilhaft Sensoren zur Druckerkennung, Druckregelventile und Druckschaltventile.

Eine weitere vorteilhafte Ausführungsform sieht vor, dass die Steifigkeitsanordnung der Tilgerbaugruppe einen Energiespeicher umfasst, der als ein elastisch verformbares Element oder ein gaskompressibles Element ausgeführt ist.

Eine weitere Ausführungsform sieht vor, dass der Energiespeicher zwischen dem Primärträgheitselement und dem Sekundärträgheitselement ein elastisch verformbares Element oder ein gaskompressibles Element ist.

Die vorliegende Erfindung wird nachfolgend mit Bezug auf die beiliegenden Figuren detailliert beschrieben. Es zeigt:
Fig. 1 eine Drehschwingungsdämpfungsanordnung mit einer Verdrehmassenanordnung, die eine Tilgerbaugruppe mit einer zu einem Verdränger in Serie geschalteten und um eine Drehachse A drehbaren Steifigkeit umfasst
Fig. 2 eine Drehschwingungsdämpfungsanordnung wie in Figur 1, jedoch mit einer parallel zur Verdrängereinheit geschalteten um die Drehachse A drehbaren Steifigkeit
Fig. 3 eine Drehschwingungsdämpfungsanordnung wie in Figur 1, jedoch nur mit einer erfindungsgemäßen externen nicht um die Drehachse A drehbaren Steifigkeit in Form eines Druckspeichers
Fig. 4 eine Drehschwingungsdämpfungsanordnung wie in Figur 1, jedoch mit einem Lastfederelement in der Verdrängereinheit

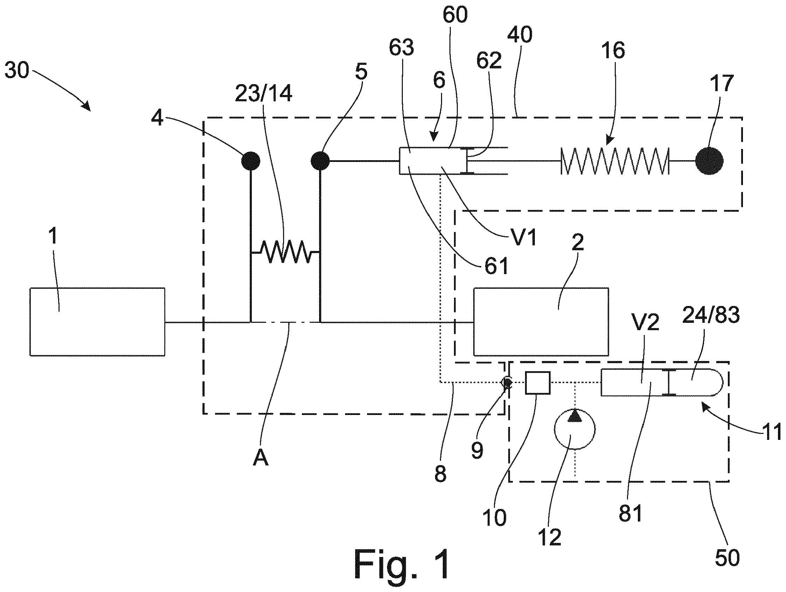

Die Figur 1 zeigt eine Drehschwingungsdämpfungsanordnung 30, die zwischen einem Antriebsaggregat 1 und einem Getriebeaggregat 2 verbaut ist. Dabei besteht hier die Drehschwingungsdämpfungsanordnung 30 vornehmlich aus einer Verdrehmassenanordnung 40, die um die Drehachse A drehbar ist und einer Dämpfungsanordnung 50, die nicht um die Drehachse A drehbar ist, sondern ortsfest, beispielsweise in einem Kofferraum eines Kraftfahrzeuges, hier nicht dargestellt, positioniert ist. Die Verdrehmassenanordnung 40 besteht hier aus einem Primärträgheitselement 4 und einem Sekundärträgheitselement 5, die beide zueinander gegen eine feste Steifigkeit 14, hier in Form einer Stahlfeder zueinander verdrehbar sind. Weiter umfasst die Verdrehmassenanordnung 40 eine Verdrängereinheit 6, die unter anderem aus einem Gehäuseelement 60, einem Verdrängerkolben 62 und einem Arbeitsraum 61 mit einem Volumen V1 besteht. Dabei ist hier das Gehäuseelement 60 der Verdrängereinheit 6 mit dem Sekundärträgheitselement 5 und der Verdrängerkolben 62 mittels einer Steifigkeitsanordnung 16 mit einer Tilgermasse 17 verbunden. Diese Bauteile sind um die Drehachse A verdrehbar und stellen den um die Drehachse A rotierenden Teil der Drehschwingungsdämpfungsanordnung 30 dar. Weiter ist der Arbeitsraum 61 der Verdrängereinheit 6 über eine Verbindungsleitung 8 und eine Drehdurchführung 9 mit einem Arbeitsraum 81 eines Druckspeichers 11 der Dämpfungsanordnung 50 verbunden. Die Dämpfungsanordnung 50 und damit auch der Druckspeicher 11 sind der nicht um die Drehachse A drehbare Teil der Drehschwingungsdämpfungsanordnung 30. Der Druckspeicher 11 umfasst weiter einen Verdrängerkolben, der den Arbeitsraum 81 gegen einen Energiespeicher 24, hier in Form eines gaskompressiblen Elements 83 abtrennt. Die Funktion der Drehschwingungsdämpfungsanordnung 30 ist dabei wie folgt. Von dem Antriebsaggregat 1, beispielsweise ein Verbrennungsmotor, wird ein Drehmoment mit den darin enthaltenen Drehschwingungen an das Primärträgheitselement und über die feste Steifigkeit 14 an das Sekundärträgheitselement 5 und danach zu einem Getriebeaggregat 2 geleitet. Dabei ist das Sekundärträgheitselement 5 mit dem Gehäuseelement 60 der Verdrängereinheit 6 verbunden. Die vorhandenen Drehschwingungen oder auch Wechselmomente genannt, werden in dem Arbeitsraum 61 der Verdrängereinheit 6 in einen Wechseldruck umgewandelt, der über ein Wirkmedium 63, hier beispielsweise durch eine Hydraulikflüssigkeit gebildet, über die Verbindungsleitung 8 und der Drehdurchführung 9 zu dem Arbeitsraum 81 des Druckspeichers 11 geleitet wird.

Hier wirkt ein gaskompressibles Element 83, beispielsweise eine Gasfeder, dem Wechseldruck im Arbeitsraum als Steifigkeit entgegen. Die Tilgerbaugruppe 20, die mit dem Verdrängerkolben 62 der Verdrängereinheit 6 verbunden ist, dient dabei als Schwingungsdämpfung.

Weiter ist hier eine Versorgungspumpe 12, beispielsweise eine Öldruckpumpe mit dem Wirkmedium 63 verbunden und dient für einen Leckageausgleich oder auch zu einer aktiven Überlagerung eines periodischen Druckverlaufes, der vorzugsweise gegenphasig wirkt. Hierzu ist jedoch eine Steuerregelungseinheit 10 erforderlich, die mit dem Wirkmedium 63 in Wirkverbindung steht und Einfluss auf den Druck des Wirkmediums nehmen kann.

Eine Versorgungspumpe 12, beispielsweise eine Öldruckpumpe, dient für einen Leckageausgleich oder auch zu einer aktiven Überlagerung eines periodischen Druckverlaufes, der vorzugsweise gegenphasig wirkt. Hierzu sind jedoch eine Steuerregelungseinheit 10 erforderlich, die mit dem Wirkmedium 63 in Wirkverbindung steht und Einfluss auf den Druck des Wirkmediums nehmen kann.

Es ist anzumerken, dass die Verdrängereinheit 6 mit der dazugehörigen Tilgerbaugruppe 20 statt mit dem Sekundärträgheitselement auch mit dem Primärträgheitselement verbunden sein kann. Die sonstigen Ausführungen bleiben dabei bestehen.

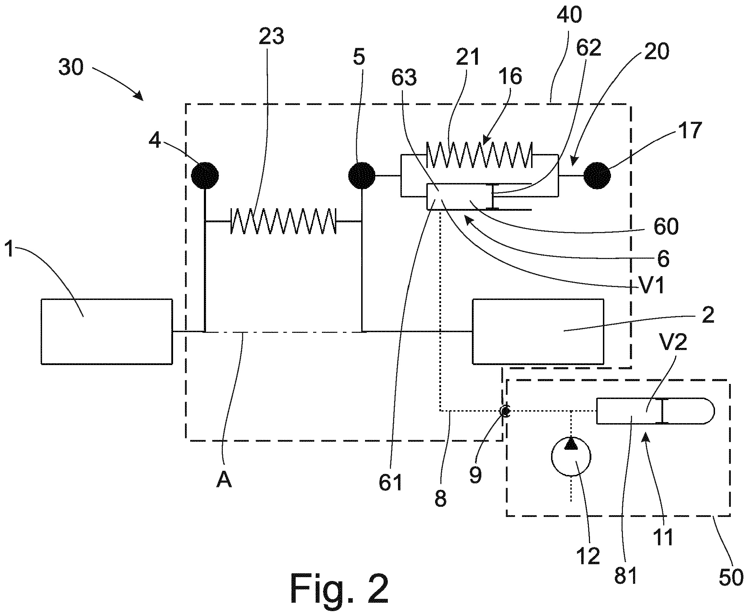

Die Figur 2 zeigt eine Drehschwingungsdämpfungsanordnung 30 wie in Figur 1, jedoch mit einer parallelen zur Verdrängereinheit 6 geschalteten und um die Drehachse A drehbaren Steifigkeitsanordnung 16. Für die weitere Figurenbeschreibung wird auf die Figurenbeschreibung der Figur 1 verwiesen.

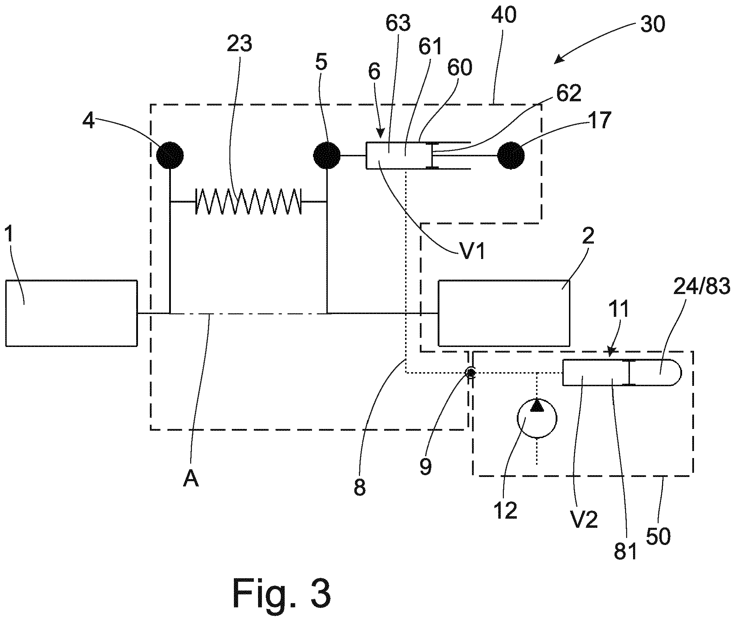

Die Figur 3 zeigt eine Drehschwingungsdämpfungsanordnung 30, wie in Figur 1 beschrieben , jedoch nur mit einer externen und nicht um die Drehachse A drehbaren Steifigkeit in Form eines Druckspeichers 11. Die um die Drehachse A drehbare Steifigkeitsanordnung 16 aus den Figuren 1 oder 2 fehlt in dieser Ausführungsform. Ansonsten wird auch hier auf die Figurenbeschreibung der Figur 1 verwiesen.

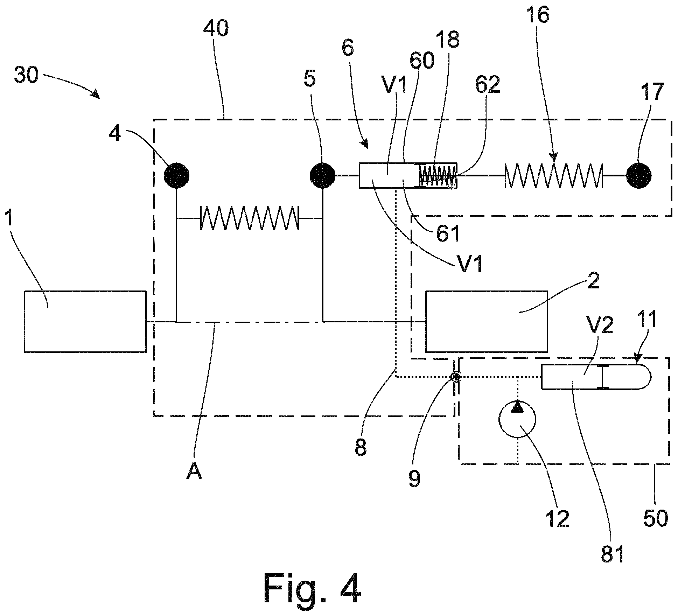

Die Figur 4 zeigt eine Drehschwingungsdämpfungsanordnung wie in Figur 1, jedoch mit einem Lastfederelement 18 in der Verdrängereinheit 6, das dem Fluiddruck in dem Arbeitsraum 61 der Verdrängereinheit 6 entgegen wirkt. Durch eine Druckerhöhung durch die Versorgungspumpe 12 gegen das Lastfederelement 18 kann die Tilgersteifigkeit angepasst werden, beispielsweise drehzahl- oder ordnungsadaptiv oder beides, beispielsweise bei Zylinderabschaltung von 2. Ordnung im Vierzylinderbetrieb auf 1. Ordnung im Zweizylinderbetrieb. Ansonsten wird auch hier auf die Figurenbeschreibung der Figur 1 verwiesen.

### Bezugszeichen

- 1: Antriebsaggregat
- 2: Getriebeaggregat
- 4: Primärträgheitselement
- 5: Sekundärträgheitselement
- 6: Verdrängereinheit
- 8: Verbindungsleitung
- 9: Drehdurchführung
- 10: Steuerregelungseinheit
- 11: Druckspeicher
- 12: Versorgungspumpe
- 14: feste Steifigkeit
- 15: Nehmerzylinder
- 16: Steifigkeitsanordnung
- 17: Tilgermasse
- 18: Lastfederelement
- 20: Tilgerbaugruppe
- 21: Energiespeicher
- 22: Energiespeicher
- 23: Energiespeicher
- 24: Energiespeicher
- 28: Tilgermassenanordnung
- 29: Tilgermasse
- 30: Drehschwingungsdämpfungsanordnung
- 40: Verdrehmassenanordnung
- 50: Dämpfungsanordnung
- 60: Gehäuseelement
- 61: Arbeitsraum
- 62: Verdrängerkolben
- 63: Wirkmedium
- 81: Arbeitsraum
- 82: Verdrängerkolben
- 83: gaskompressibles Element
- 84: elastisch verformbares Element
- 90: Federanordnung
- V1: Volumen
- V2: Volumen
- A: Drehachse

## Patentansprüche

1. Drehschwingungsdämpfungsanordnung (30) für einen Antriebsstrang eines Kraftfahrzeugs, umfassend
eine um eine Drehachse A drehbare Verdrehmassenanordnung (40),
wobei die Verdrehmassenanordnung (40) ein um die Drehachse A drehbares Primärträgheitselement (4) und ein zu dem Primärträgheitselement (4) entgegen der Wirkung eines Energiespeichers (23) relativ verdrehbares Sekundärträgheitselement (5) und eine Verdrängereinheit (6) mit einem Arbeitsraum (61) umfasst,
wobei die Verdrängereinheit (6) einerseits mit dem Primärträgheitselement (4) oder mit dem Sekundärträgheitselement (5) und andererseits mit einer Tilgermasse (17) wirkverbunden ist, **dadurch gekennzeichnet, dass** der Arbeitsraum (61) der Verdrängereinheit (6) mittels einer Verbindungsleitung (8) mit einem externen und um die Drehachse A drehfesten Arbeitsraum (81) eines Druckspeichers (11) wirkverbunden ist.

2. Drehschwingungsdämpfungsanordnung (30) nach Anspruch 1, **dadurch gekennzeichnet, dass** eine Steifigkeitsanordnung (16) parallel oder seriell zu der Wirkrichtung der Verdrängereinheit (6) zwischen der Tilgermasse (17) und dem Primärträgheitselement (4) oder zwischen der Tilgermasse (17) und dem Sekundärträgheitselement (5) wirksam ist.

3. Drehschwingungsdämpfungsanordnung (30) nach Anspruch 1 oder 2, **dadurch gekennzeichnet, dass** der Druckspeicher (11) einen Energiespeicher (24) umfasst, wobei der Energiespeicher (24) ein elastisch verformbares Element oder ein gaskompressibles Element ist.

4. Drehschwingungsdämpfungsanordnung (30) nach einem der Ansprüche 1 bis 3, **dadurch gekennzeichnet, dass** das Wirkmedium zwischen der Verdrängereinheit (6) und dem Druckspeicher (11) ein viskoses Medium, ein Gas oder eine Kombination aus einem viskosem Medium und einem Gas ist.

5. Drehschwingungsdämpfungsanordnung (30) nach einem der Ansprüche 1 bis 4, **dadurch gekennzeichnet, dass** die Verbindungsleitung (8) eine Drehdurchführung (9) umfasst, wobei die Drehdurchführung (9) die um die Drehachse A drehbare Verdrängereinheit (6) und den zur Drehachse A drehfesten Druckspeicher flüssigkeitsdicht und oder gasdicht und zueinander verdrehbar verbindet.

6. Drehschwingungsdämpfungsanordnung (30) nach einem der vorangehenden Ansprüche, **dadurch gekennzeichnet, dass** die Verdrängereinheit (6) ein Lastfederelement (18) umfasst, wobei das Lastefederelement (18) entgegen einer Wirkungrichtung einer Volumenänderung V1 des Arbeitsraumes (61) der Verdrängereinheit (6) wirkt.

7. Drehschwingungsdämpfungsanordnung (30) nach einem der vorangehenden Ansprüche, **dadurch gekennzeichnet, dass** der Arbeitsraum (81) des Druckspeichers (11) mit einer Versorgungspumpe (12) und / oder mit einer Steuerregelungseinheit (10) wirkverbunden ist.

8. Drehschwingungsdämpfungsanordnung (30) nach einem der Ansprüche 2 bis 7, **dadurch gekennzeichnet, dass** die Steifigkeitsanordnung (16) der Tilgerbaugruppe (20) einen Energiespeicher (21) umfasst, der als ein elastisch verformbares Element oder ein gaskompressibles Element ausgeführt ist.

9. Drehschwingungsdämpfungsanordnung (30) nach einem der vorangehenden Ansprüche, **dadurch gekennzeichnet, dass** der Energiespeicher (23) zwischen dem Primärträgheitselement (4) und dem Sekundärträgheitselement (5) ein elastisch verformbares Element oder ein gaskompressibles Element ist.

## Claims

1. Rotary vibration damping arrangement (30) for a drivetrain of a motor vehicle, comprising a rotational mass arrangement (40), which is rotatable about an axis of rotation A,
wherein the rotational mass arrangement (40) comprises a primary inertia element (4), which is rotatable about the axis of rotation A, and a secondary inertia element (5), which is relatively rotatable with respect to the primary inertia element (4) counter to the action of an energy accumulator (23), and a displacement unit (6) with a working chamber (61),
wherein the displacement unit (6) is operatively connected at one side to the primary inertia element (4) or to the secondary inertia element (5) and at the other side to an absorber mass (17), **characterized in that** the working chamber (61) of the displacement unit (6) is operatively connected by means of a connecting line (8) to an external working chamber (81) of a pressure accumulator (11), which external working chamber is rotationally fixed with respect to the axis of rotation A.

2. Rotary vibration damping arrangement (30) according to Claim 1, **characterized in that** a stiffness arrangement (16) is active in parallel or in series with respect to the direction of action of the displacement unit (6) between the absorber mass (17) and the primary inertia element (4) or between the absorber mass (17) and the secondary inertia element (5) .

3. Rotary vibration damping arrangement (30) according to Claim 1 or 2, **characterized in that** the pressure accumulator (11) comprises an energy accumulator (24), wherein the energy accumulator (24) is an elastically deformable element or a compressible gas element.

4. Rotary vibration damping arrangement (30) according to one of Claims 1 to 3, **characterized in that** the action medium between the displacement unit (6) and the pressure accumulator (11) is a viscous medium, a gas or a combination of a viscous medium and a gas.

5. Rotary vibration damping arrangement (30) according to one of Claims 1 to 4, **characterized in that** the connecting line (8) comprises a rotary lead-through (9), wherein the rotary lead-through (9) connects the displacement unit (6), which is rotatable about the axis of rotation A, and the pressure accumulator, which is rotationally fixed with respect to the axis of rotation A, in a liquid-tight and/or gas-tight manner and in a manner rotatable with respect to one another.

6. Rotary vibration damping arrangement (30) according to one of the preceding claims, **characterized in that** the displacement unit (6) comprises a load spring element (18), wherein the load spring element (18) acts counter to a direction of action for a change in volume V1 of the working chamber (61) of the displacement unit (6).

7. Rotary vibration damping arrangement (30) according to one of the preceding claims, **characterized in that** the working chamber (81) of the pressure accumulator (11) is operatively connected to a supply pump (12) and/or to a control/regulation unit (10) .

8. Rotary vibration damping arrangement (30) according to one of Claims 2 to 7, **characterized in that** the stiffness arrangement (16) of the absorber assembly (20) comprises an energy accumulator (21) which is in the form of an elastically deformable element or a compressible gas element.

9. Rotary vibration damping arrangement (30) according to one of the preceding claims, **characterized in that** the energy accumulator (23) between the primary inertia element (4) and the secondary inertia element (5) is an elastically deformable element or a compressible gas element.

## Revendications

1. Ensemble d'amortissement de vibrations de torsion (30) pour une chaîne cinématique d'un véhicule automobile, comprenant
un ensemble à masses tournantes (40) pouvant tourner autour d'un axe de rotation A,
l'ensemble à masses tournantes (40) comprenant un élément d'inertie primaire (4) pouvant tourner autour d'un axe de rotation A et un élément d'inertie secondaire (5) pouvant être mis en rotation par rapport à l'élément d'inertie primaire (4) contre l'effet d'un accumulateur d'énergie (23) et une unité de refoulement (6) dotée d'un espace de travail (61),
l'unité de refoulement (6) étant d'une part en relation active avec l'élément d'inertie primaire (4) ou avec l'élément d'inertie secondaire (5) et d'autre part avec une masse d'amortissement (17),
**caractérisé en ce que** l'espace de travail (61) de l'unité de refoulement (6) est en relation active au moyen d'une conduite de raccordement (8) avec un espace de travail (81), externe et verrouillé en rotation autour de l'axe de rotation A, d'un accumulateur de pression (11) .

2. Ensemble d'amortissement de vibrations de torsion (30) selon la revendication 1, **caractérisé en ce qu'**un ensemble raidisseur (16) agit en parallèle ou en série avec la direction active de l'unité de refoulement (6) entre la masse d'amortissement (17) et l'élément d'inertie primaire (4) ou entre la masse d'amortissement (17) et l'élément d'inertie secondaire (5).

3. Ensemble d'amortissement de vibrations de torsion (30) selon la revendication 1 ou 2, **caractérisé en ce que** l'accumulateur de pression (11) comprend un accumulateur d'énergie (24), l'accumulateur d'énergie (24) étant un élément déformable élastiquement ou un élément de gaz compressible.

4. Ensemble d'amortissement de vibrations de torsion (30) selon l'une quelconque des revendications 1 à 3, **caractérisé en ce que** le fluide actif entre l'unité de refoulement (6) et l'accumulateur de pression (11) est un fluide visqueux, un gaz ou une combinaison d'un fluide visqueux et d'un gaz.

5. Ensemble d'amortissement de vibrations de torsion (30) selon l'une quelconque des revendications 1 à 4, **caractérisé en ce que** la conduite de raccordement (8) comprend un passage rotatif (9), le passage rotatif (9) reliant l'unité de refoulement (6) pouvant tourner autour de l'axe de rotation A et l'accumulateur de pression verrouillé en rotation par rapport à l'axe de rotation A de manière étanche aux fluides et/ou de manière étanche aux gaz et de manière à pouvoir tourner l'un par rapport à l'autre.

6. Ensemble d'amortissement de vibrations de torsion (30) selon l'une quelconque des revendications précédentes, **caractérisé en ce que** l'unité de refoulement (6) comprend un élément de ressort de charge (18), l'élément de ressort de charge (18) agissant à l'opposé d'une direction active d'un changement de volume V1 de l'espace de travail (61) de l'unité de refoulement (6).

7. Ensemble d'amortissement de vibrations de torsion (30) selon l'une quelconque des revendications précédentes, **caractérisé en ce que** l'espace de travail (81) de l'accumulateur de pression (11) est en relation active avec une pompe d'alimentation (12) et/ou avec une unité de régulation de commande (10).

8. Ensemble d'amortissement de vibrations de torsion (30) selon l'une quelconque des revendications 2 à 7, **caractérisé en ce que** l'ensemble raidisseur (16) du sous-ensemble d'amortissement (20) comprend un accumulateur d'énergie (21) qui est réalisé sous la forme d'un élément déformable élastiquement ou d'un élément de gaz compressible.

9. Ensemble d'amortissement de vibrations de torsion (30) selon l'une quelconque des revendications précédentes, **caractérisé en ce que** l'accumulateur d'énergie (23) entre l'élément d'inertie primaire (4) et l'élément d'inertie secondaire (5) est un élément déformable élastiquement ou un élément de gaz compressible.
